# EUROPÄISCHE PATENTSCHRIFT

(11) **EP 2 633 253 B1**
(45) Veröffentlichungstag und Bekanntmachung des Hinweises auf die Patenterteilung: **12.08.2015**
(21) Anmeldenummer: 11805382.6
(22) Anmeldetag: 24.10.2011
(51) Int. Cl.: F27B 3/18, F27D 3/00, F27D 3/04

(54) **SCHROTT-SCHUBVORRICHTUNG**
SCRAP-PUSHING APPARATUS
DISPOSITIF POUSSEUR POUR FERRAILLES

(30) Priorität: 25.10.2010 DE 102010049238
(43) Veröffentlichungstag der Anmeldung: 04.09.2013
(73) Patentinhaber: INTECO special melting technologies GmbH, 8600 Bruck a.d. Mur (AT)
(72) Erfinder: RUMMLER, Knut, 77694 Kehl (DE)
(74) Vertreter: Thämer, Wolfgang
(86) Internationale Anmeldenummer: PCT/DE2011/001877
(87) Internationale Veröffentlichungsnummer: WO 2012/055391

(56) Entgegenhaltungen:
- EP-A1- 0 056 773
- WO-A1-2005/052481
- WO-A1-2010/115619
- WO-A1-2011/118365
- JP-A- 2005 233 491
- US-A- 5 513 206

## Beschreibung

Die Erfindung betrifft eine Schrott-Schubvorrichtung mit einem in einer Linearführung geführten Schrottschieber und mit einem hydraulischen Antriebssystem, das mindestens eine Zylinder-Kolben-Einheit umfasst, wobei der Schrottschieber mindestens eine normal zur Schieberführungsrichtung projizierte wirksame Schieberstirnfläche aufweist.

Aus der DE 103 55 549 A1 ist eine derartige Vorrichtung bekannt. Der Einsatz einiger Schrottsorten kann zum Blockieren der Schubvorrichtung führen. Der Schrottschieber muss dann gegebenenfalls mehrfach vor- und zurückgefahren werden.

Die US 5,513,206 offenbart ein Chargierschacht-System mit mehreren Schrott-Schubvorrichtungen. Jede dieser Schrott-Schubvorrichtungen hat einen einzigen, mittels einer Antriebseinheit angetriebenen Schieber.

Der vorliegenden Erfindung liegt die Problemstellung zugrunde, die Zuverlässigkeit der Funktion der Schrott-Schubvorrichtung zu erhöhen.

Diese Problemstellung wird mit den Merkmalen des Hauptanspruches gelöst. Dazu umfasst der Schrottschieber einen intern geführten Schrott-Schubklotz, der mittels mindestens einer einen Kolben umfassenden zweiten hydraulischen Zylinder-Kolben-Einheit relativ zur erstgenannten Zylinder-Kolben-Einheit antreibbar ist. Dieser Schrott-Schubklotz umfasst eine normal zu seiner Führungsrichtung projizierte wirksame Stirnfläche. Außerdem ist der Quotient aus der wirksamen Kolbenfläche aller zweiten Zylinder-Kolbeneinheiten und der wirksamen Stirnfläche größer als der Quotient der wirksamen Kolbenflächen aller ersten Zylinder-Kolben-Einheiten und der wirksamen Schieberstirnfläche.

Weitere Einzelheiten der Erfindung ergeben sich aus den Unteransprüchen und der nachfolgenden Beschreibung schematisch dargestellter Ausführungsformen.
- Figur 1:: Längsschnitt eines Elektrolichtbogenofens mit einem Chargierschacht-System;
- Figur 2:: Querschnitt des Chargierschacht-Systems;
- Figur 3:: Schrott-Schubvorrichtung;
- Figur 4:: Unteransicht der Schrott-Schubvorrichtung;
- Figur 5:: Stirnansicht der Schrott-Schubvorrichtung;
- Figur 6:: Ausgefahrene Schrott-Schubvorrichtung;
- Figur 7:: Fühungsdetails der Schrott-Schubvorrichtung;
- Figur 8:: Stirnplatte mit Nase;
- Figur 9:: Detail des Chargierschacht-Systems mit Schrott-Schubvorrichtung und mit Schwenkklappe;
- Figur 10:: Regelkreise der Schrott-Schubvorrichtung;
- Figur 11:: Hydraulische Ansteuerung der Zylinder-Kolben-Einheiten.

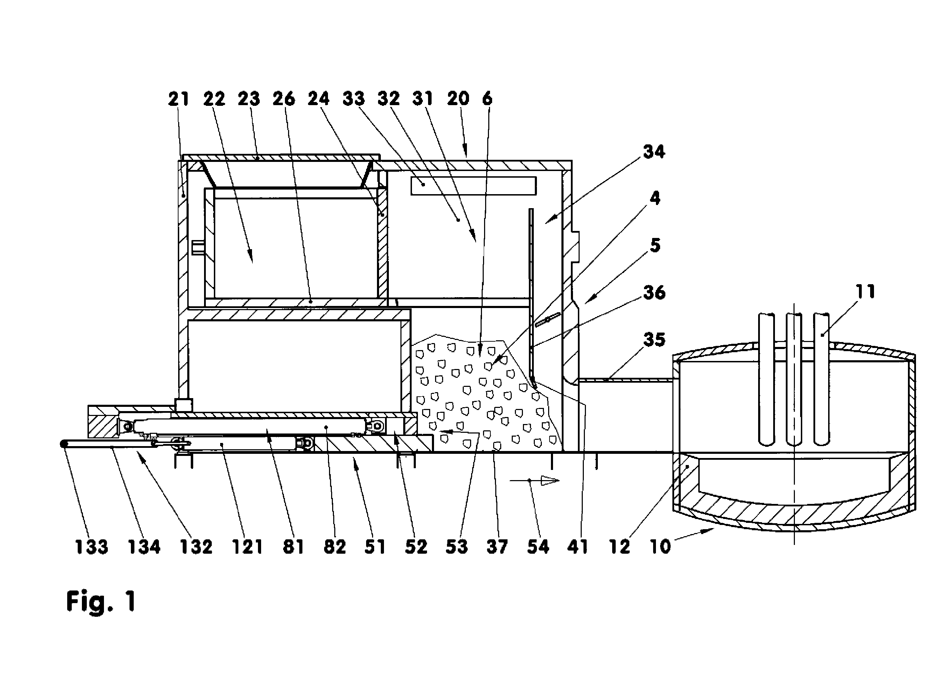

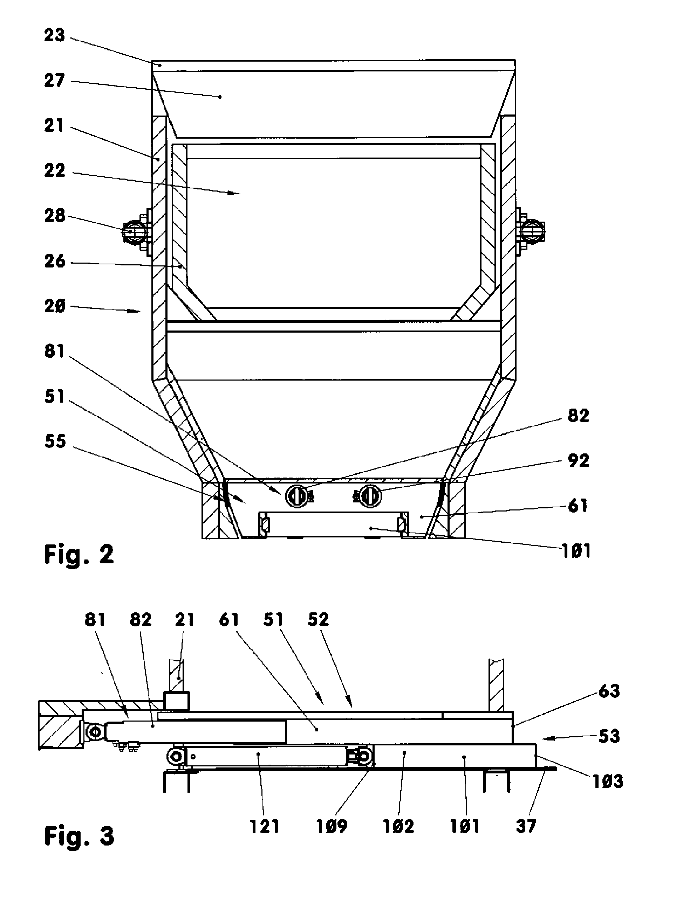

Die Figuren 1 und 2 zeigen einen Elektrolichtbogenofen (5) mit einem Ofengefäß (10) und mit einem Chargierschacht-System (20). Das Einsatzmaterial (4), z.B. Stahlschrott, wird mittels des Chargierschschacht-Systems (20) portionsweise dem Ofengefäß (10) zugeführt. Dort wird es mithilfe elektrischer und/oder fossiler Energie geschmolzen. Nach dem Schmelzen und Feinen bzw. Homogenisieren wird aus dem Ofengefäß (10) Flüssigstahl mit einer Temperatur von z.B. 1620 Grad Celsius abgestochen. Mit einer derartigen Anlage können pro Stunde mehr als 100 Tonnen Flüssigstahl aus Stahlschrott erzeugt werden. Aufgrund der geringen Dichte des Einsatzmaterials (4) - die Dichte von Schrott beträgt weniger als ein Zehntel der Dichte des Flüssigstahls - ist für die genannte Abstichmasse der Einsatz von mehr als 200 Kubikmeter Schrott erforderlich.

Das Chargierschacht-System (20) hat ein Traggerüst (21), das im Ausführungsbeispiel ein Vorchargierfach (22) mit einem Trichter (27) und mit einem Verschluss (23) sowie einen schachtförmigen Behälter (31) trägt. Das Vorchargierfach (22) und der schachtförmige Behälter (31) sind beispielsweise mittels einer öffenbaren Trennwand (24) voneinander abgegrenzt. Das Traggerüst (21) dient unter anderem der Wasserverteilung für die gekühlten Bereiche des an seiner Oberseite verschlossenen schachtförmigen Behälters (31). An einer oder an beiden Seitenwänden (32) des schachtförmigen Behälters (31) sind Absaugöffnungen (33) angeordnet. An den schachtförmigen Behälter grenzt in Richtung des Ofengefäßes (10) ein Absaugkanal (34) an. Letzterer hat in dem in der Figur 1 dargestellten Längsschnitt z.B. eine Länge von 1,2 Metern. Seine Breite normal zur Zeichenebene der Figur 1 entspricht der Breite des schachtförmigen Behälters (31).

Der schachtförmige Behälter (31), der Absaugkanal (34) und das Ofengefäß (10) sind beispielsweise mittels eines Tunnels (35) verbunden. Dieser hat z.B. eine Länge von zwei Metern und einen beispielsweise rechteckigen Querschnitt. Seine Wände können wassergekühlt sein.

Das gesamte Chargierschacht-System (20) ist beispielsweise um zwei Meter verfahrbar, um das Ofengefäß (10) entnehmen zu können.

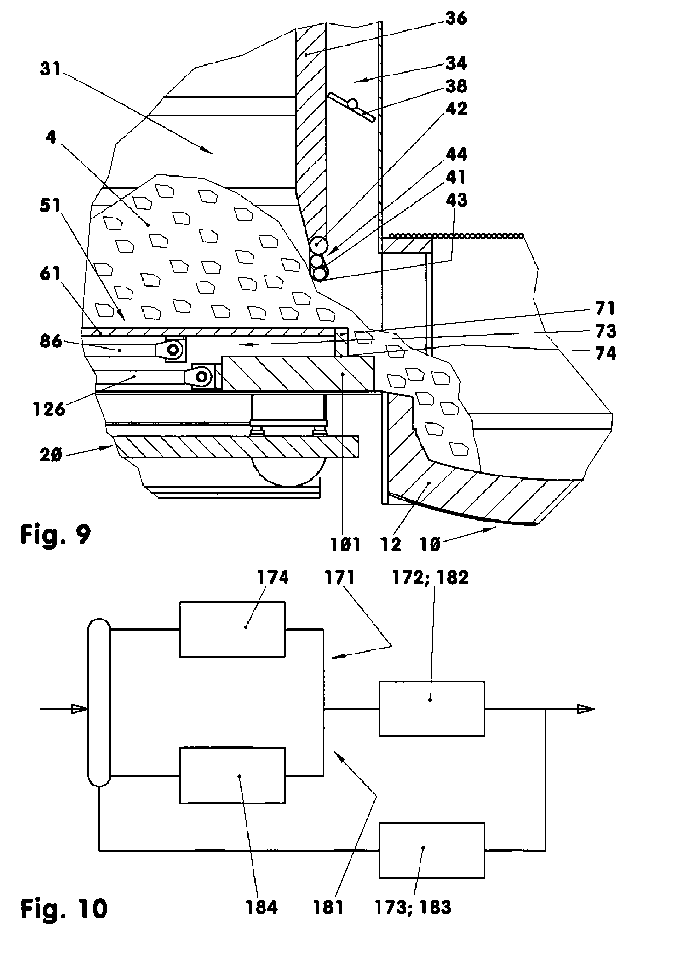

Die dem Absaugkanal (34) zugewandte Wand (36) des schachtförmigen Behälters (31) umfasst im Ausführungsbeispiel eine Schwenkklappe (41) vgl. die Figuren 1 und 9. Diese wassergekühlte Klappe (41) hat im Ausführungsbeispiel eine Höhe von 500 Millimetern unterhalb der Schwenkachse (42). Ihre Breite entspricht der Innenbreite des schachtförmigen Behälters (31). Die gesamte Klappe (41) ist um die an der Außenseite des schachtförmigen Behälters (31) gelagerte Schwenkachse (42) beispielsweise um einen Winkel von 90 Grad schwenkbar. Dieser Winkel kann auch bis zu 110 Grad betragen. In der in der Figur 9 dargstellten Ausgangsposition (44) hängt die Schwenkklappe (41) unter dem Einfluß ihrer Schwerkraft zumindest annähernd vertikal, so dass ihre Unterkante (43) einen Abstand von z.B. 2100 Millimetern von der Bodenfläche (37) des schachtförmigen Behälters (31) hat. Die Unterkante (43) liegt dann z.B. 900 Millimeter oberhalb einer Schrott-Schubvorrichtung (51). In einer oder in beiden Endlagen kann die Schwenkklappe (41) beispielsweise durch außerhalb des schachtförmigen Behälters (31) angeordnete Anschläge am weiteren Schwenken gehindert sein. In dieser geschwenkten Position kann die Schwenkklappe (41) den Absaugkanal (34) z.B. bis zur Hälfte verdecken. Hiermit kann selbst bei einem Blockieren des Schrotts (4) der komplette Abgas-Volumenstrom durch den Absaugkanal (34) gesaugt werden.

Am unteren Abschnitt des schachtförmigen Behälters (31) ist die Schrott-Schubvorrichtung (51) angeordnet, vgl. die Figuren 1 - 7. Diese umfasst einen im Traggerüst (21) geführten Schrottschieber (52) sowie dessen Antriebssystem (81).

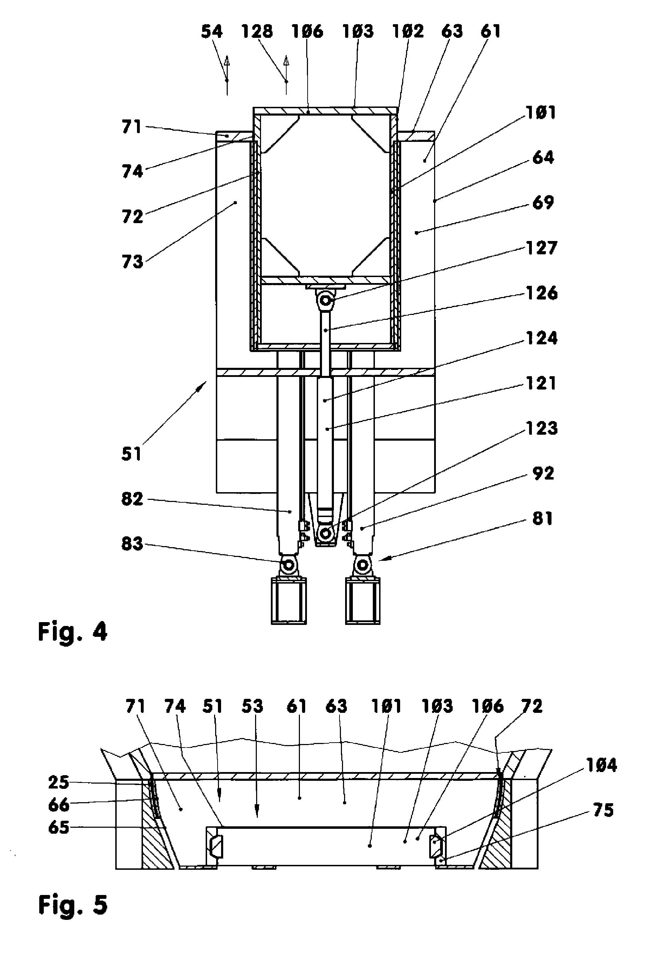

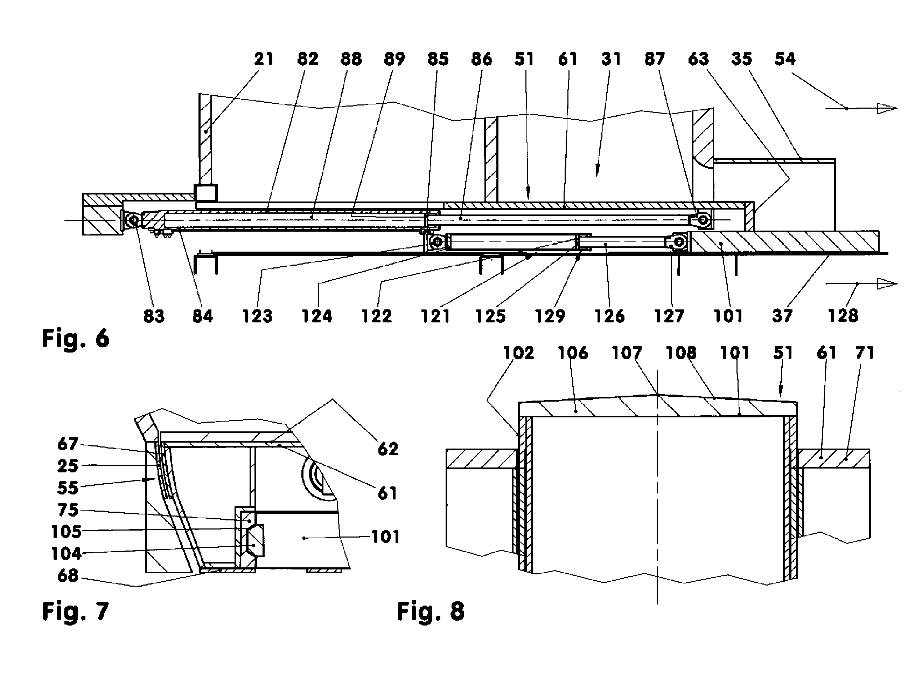

Der Schrottschieber (52) umfasst im Ausfühungsbeispiel einen ersten, äußeren Schiebeklotz (61) und einen in diesem geführten inneren Schubklotz (101). Der Schiebeklotz (61) ist ein Hohlkörper und hat eine zumindest annähernd trapezoidförmige Hüllkontur. Hierbei sind die kurzen Seiten unten angeordnet. Der beispielsweise als Schweißkonstruktion ausgeführte Schiebeklotz (61) ist symmetrisch zu einer vertikalen Mittenlängsebene aufgebaut. Seine Oberseite (62) und seine vordere Stirnfläche (63) sind als Planflächen ausgebildet. Die Seitenflächen (64) haben einen unteren geraden Bereich (65) und einen einachsig gewölbten Führungsbereich (66), vgl. die Figuren 5 und 7. Der Krümmungsradius des Führungsbereichs (66) ist beispielsweise größer als 2 Meter. Der Führungsbereich (66) trägt zumindest abschnittsweise Gleitplatten (67), die im eingebauten Zustand an Gleitplatten (25) des Traggerüsts (21) anliegen. Die Gleitplatten (25, 67) dieser Linearführung (55) können aus Stahl oder aus einer verschleißfesten Metalllegierung hergestellt sein. Gegebenenfalls sind Kohlenstoffeinlagerungen zur Verringerung des Haft-und/oder Gleitreibungskoeffizienten denkbar. Weitere Gleitelemente (68) sind z.B. an der weitgehenden offenen Unterseite (69) angeordnet.

Die Stirnplatte (71) ist im Ausführungsbeispiel normal zu den Führungen (72) ausgebildet. Beispielsweise im Innenraum (73) des Schiebeklotzes (61) sind zwei Antriebseinheiten (82, 92), z.B. Zylinder-Kolben-Einheiten (82, 92), befestigt. Diese bilden das Antriebssystem (81) der Schrott-Schubvorrichtung (51). Die beiden zueinander parallel angeordneten identischen Zylinder-Kolben-Einheiten (82, 92) haben jeweils einen beispielsweise am Traggerüst (21) in einem Gelenklager (83) gelagerten Zylinder (84) und einen im Zylinder (84) geführten Kolben (85) mit einer Kolbenstange (86). Letztere ist mit einem Gelenklager (87) im Schiebeklotz (61) gelagert. Im Ausführungsbeispiel beträgt der Kolbenhub 6000 Millimeter, der Kolbendurchmesser 340 Millimeter und der Kolbenstangendurchmesser 240 Millimeter. Im eingebauten Zustand ist die Stirnplatte (71) des Schiebeklotzes (61) bündig mit der Innenwandung des schachtförmigen Behälters (31). Der Schrottschieber (52) ist beispielsweise waagerecht angeordnet, so dass er auf der horizontalen Bodenfläche (37) aufliegt.

Die Stirnplatte (71) des Schiebeklotzes (61) hat eine Ausnehmung (74), aus der im eingebauten Zustand der Schubklotz (101) in der eingefahrenen Position z.B. um 300 Millimeter heraussteht. Die Stirnfläche (63) des Schiebeklotzes (61) kann auch bündig mit der Stirnfläche (103) des Schubklotzes (101) sein. Der Schubklotz (101) ist im Ausführungsbeispiel in seiner Hüllkontur quaderförmig ausgebildet. Die Schweißkonstruktion ist z.B. symmetrisch zu ihrer vertikalen Mittenlängsebene. Der als Hohlkörper ausgebildete Schrott-Schubklotz (101) trägt an seinen Längsseiten (102) Führungsprismen (104). Im eingebauten Zustand sitzen diese in komplementär ausgebildeten Führungsaufnahmen (75) des Schiebeklotzes (61). Die obere und die untere Führungsfläche (105) der Führungsprismen (104) schließen beispielsweise einen Winkel von 60 Grad ein. Das Führungssystem (75, 104) kann auch so ausgebildet sein wie das Führungssystem des Schiebeklotzes (61). Auch der Schiebeklotz (61) kann mittels einer Prismenführung z.B. im Traggerüst (21) geführt sein. Ebenfalls ist eine Rollenführung denkbar.

Die Stirnplatte (106) des Schubklotzes (101) ist im Ausführungsbeispiel normal zu den Führungen (75, 104) angeordnet. Ihre Stirnfläche (103) beträgt 30 % der gesamten Schieberstirnfläche (53), die sich aus der Summe der Strinflächen (63, 103) des Schiebeklotzes (61) und des Schubklotzes (101) ergibt. Die Unterkanten der beiden Stirnflächen (63, 103) sind miteinander bündig, die Höhe der Schubklotz-Stirnfläche (103) beträgt in der Darstellung der Figur 5 43 % der Schieberstirnfläche (53).

Die Figur 8 zeigt eine Draufsicht eines Schubklotzes (101) mit einer nasenförmig ausgebildeten Stirnplatte (106). Die beiden die Nase (107) bildenden Flügel (108) schließen einen Winkel von 174 Grad ein. Dieser Winkel kann zwischen 150 Grad und 180 Grad liegen. Auch die Stirnplatte (71) des Schiebeklotzes (61) kann nasenförmig ausgebildet sein. Die Nase (107) ist im Ausführungsbeispiel vertikal angeordnet.

Beispielsweise an der Rückseite (109) des Schubklotzes (101) ist eine weitere als Zylinder-Kolben-Einheit (121) ausgebildete Antriebseinheit (121) angeordnet. Im Ausführungsbeispiel ist der Zylinder (124) dieser Zylinder-Kolben-Einheit (121) mittels eines Gelenklagers (123) am Schiebeklotz (61) gelagert. Die Kolbenstange (126) ist in einem Gelenklager (127) am Schubklotz (101) gelagert. Der Durchmesser des Kolbens (125) und der Durchmesser der Kolbenstange (126) sind im Ausführungsbeispiel gleich den Werten der ersten Antriebseinheiten (82, 92). Somit ist die wirksame Kolbenfläche (89) einer ersten Zylinder-Kolben-Einheit (82; 92) genauso groß wie die wirksame Kolbenfläche (122) der zweiten Zylinder-Kolben-Einheit (121). Der Kolbenhub ist halb so groß wie der Kolbenhub der ersten Zylinder-Kolben-Einheiten (82, 92). Dieser Hub der zweiten Zylinder-Kolben-Einheit (121) kann z.B. zwischen 40 % und 60 % des Hubs der ersten Zylinder-Kolben-Einheiten (82, 92) betragen.

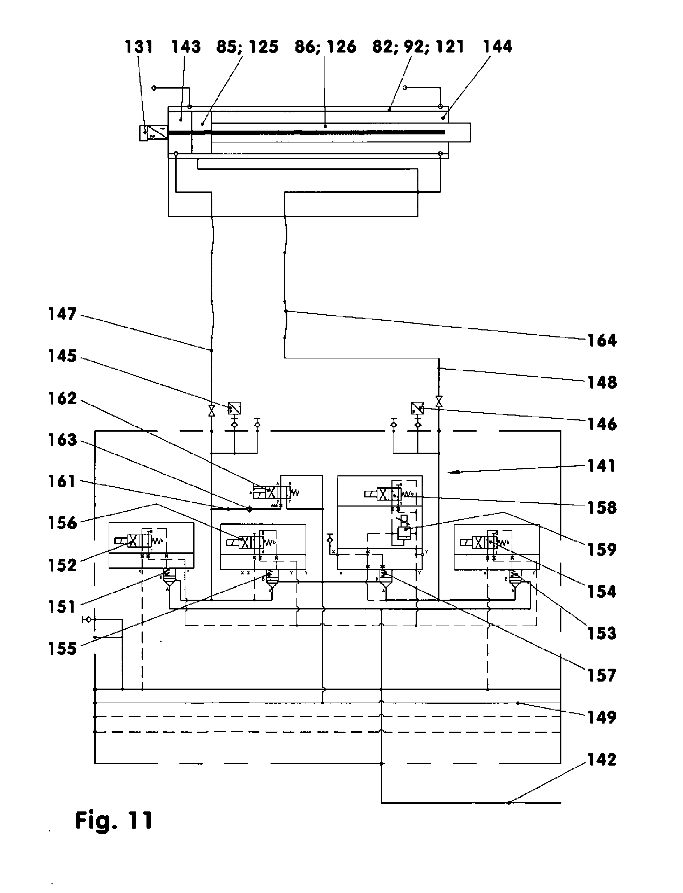

Alle genannten Zylinder-Kolben-Einheiten (82, 92, 121) verfügen im Ausführungsbeispiel über ein Wegmesssystem (131), vgl. Figur 11. Die Zylinder-Kolben-Einheiten (82, 92, 121) können entweder in der hier beschriebenen Rundbauart oder in Zugankerbauart ausgeführt sein. Anstatt der Gelenklager (83, 87, 123, 127) können gegebenenfalls Schwenklager eingesetzt werden. Auch eine einseitge Flanschmontage, ein Schwenkzapfen, etc. ist denkbar.

Die Hydraulikverbindung (132) zwischen der zweiten Zylinder-Kolben-Einheit (121) und dem Traggerüst (21) ist beispielsweise mit Schläuchen (133) ausgeführt. In dem in der Figur 1 dargestellten Ausführungsbeispiel liegen diese Schläuche (133) in einer Schlauchführungskette (134). Die Schläuche (133) können jedoch auch hängend ausgebildet sein.

Die hydraulische Ansteuerung ist so ausgelegt, dass die ersten (82, 92) und die zweiten Antriebseinheiten (121) unabhängig voneinander angesteuert werden können. Das beispielsweise zentrale hydraulische Aggregat ermöglicht, alle Antriebsheinheiten gleichzeitig zu verfahren. Der hierzu erforderliche Volumenstrom kann entweder mittels Pumpen oder mitttels eines Druckspeichers zur Verfügung gestellt werden. Die maximale Verfahrgeschwindigkeit beträgt beispielsweise 150 Millimeter pro Sekunde. Die Verrohrung zwischen dem hydraulischen Ventilstand und den Zylinder-Kolben-Einheiten (82, 92, 121) ist beispielsweise mit Rohren und Schläuchen der Nennweite zwei Zoll ausgeführt. Das Hydraulikmedium ist z.B. eine schwer entflammbare Hydraulikflüssigkeit auf der Basis von Wasser-Glykol. Auch andere hydraulische Flüssigkeiten, beispielsweise Hydrauliköl auf Mineralölbasis, sind denkbar. Der Nenndruck der Hydraulikanlage beträgt z.B. 160 x 10⁵ N/m².

Der Ventilstand (141) einer einzelnen doppelt wirkenden Zylinder-Kolben-Einheit (82; 92; 121) ist in der Figur 11 dargestellt. Die beiden anderen Ventilstände sind analog hierzu aufgebaut. Die von den Pumpen kommende Druckleitung (142) ist an zwei hydraulisch vorgesteuerte 2/2-Wegeventile (151, 153) mit Federrückstellung angeschlossen. Das jeweilige Vorsteuerventil (152, 154) ist im Ausführungsbeispiel ein elektromagnetisches 4/2-Wegeventil mit Federrückstellung. Abgangsseitig ist an eines dieser Ventile (152) die Kolbenseite (143) und an das andere Ventil (153) die Kolbenstangenseite (144) angeschlossen. In jeder Zuführleitung (147, 148) ist im Ausführungsbeispel ventilstandsseitig ein Drucksensor (145, 146) angeordnet. Die Zuführleitungen (147, 148) haben Schläuche (164) zum Ausgleich von Bewegungen der Zylinder-Kolben-Einheiten (82, 92, 121) relativ zum Ventilstand (141) und zum Traggerüst (21).

An den Zuführleitungen (147, 148) ist jeweils ein mit der Tankleitung (149) verbundenes, hydraulisch vorgesteuertes 2/2-Wegeventil (155, 157) mit Federrückstellung angeschlossen. Die Vorsteuerventile (156, 158) können so aufgebaut sein wie oben beschrieben. Im Ausführungsbeispiel hat das kolbenstangenseitige Tankventil (157) ein weiteres 2/2-Vorsteuerventil (159).

Die Tankleitung (149) und die kolbenseitige Zuführleitung (147) sind mittels einer Bypassleitung (161) verbunden. In dieser Bypassleitung (161) sitzen ein elektromagnmetisch betätigtes 4/2-Wegeventil (162) mit Federrückstellung und beispielsweise ein Rückschlagventil (163).

Nach dem Entladen des Schrottkorbs in das Vorchargierfach (22) wird der Verschluß (23) verschlossen. Ein zunächst im Vorchargierfach (22) angeordneter Schubkorb (26) mit einem Antrieb (28) fördert den Schrott (4) weiter in den schachtförmigen Behälter (31), wobei die Trennwand (24) zeitweise geöffnet wird. In den Figuren 1 und 9 ist der mit Schrott (4) befüllte schachtförmige Behälter (31) dargestellt. Während des Betriebs des Elektrolichtbogenofens (5) wird zumindest ein Teil der beim Schmelzprozess entstehenden Abgase durch die Schrottsäule (6) hindurch zur Absaugöffnung (33) gesaugt. Die Abgase geben hierbei unter Abkühlung thermische Energie an den Schrott (4) ab, der dabei vorgewärmt wird.

Die Schrott-Schubvorrichtung (51) ist in der Ausgangsposition eingefahren. Der Schrottschieber (52) steht in der in den Figuren 1 und 3 dargestellten Ausgangsposition. Alle Zylinder-Kolben-Einheiten (82, 92, 121) sind eingefahren.

Um den Schrott (4) aus dem schachtförmigen Behälter (31) in das Ofengefäß (10) zu fördern, wird die Schrott-Schubvorrichtung (51) ausgefahren, vgl. Figur 6. Hierzu wird mittels der beiden Zylinder-Kolben-Einheiten (82, 92) der Schrottschieber (52) aus in der Figur 1 gezeigte Lage nach rechts verfahren. Der Schrott (4) wird durch den Tunnel (35) hindurch in Richtung des Ofengefäßes (10) verschoben. Hierbei rutscht der Schrott (4) über die Ausmauerung (12) in das Ofengefäß (10).

Beim Schieben des Schrotts (4) wird dieser gegen den unteren Bereich der Schwenkklappe (41) - unterhalb der Schwenkachse (42) - gedrückt. Die Schwenkklappe (41) wird aufgeschwenkt. Der Aufschwenkwinkel kann ein Teilwinkel des maximalen Aufschwenkwinkels sein. Die Schwenkklappe (41) kann aber auch bis an den Endlagenanschlag geschwenkt werden.

Der Schrottschieber (52) kann beispielsweise bis zu einem Meter in den Tunnel (35) geschoben werden. Der relativ zum Schiebeklotz (61) verfahrbare Schubklotz (101) ist in Richtung der Ofenmitte bis zu 100 Millimeter über die Ausmauerung (12) verfahrbar. Aufgrund des langen Gesamthubes kann der Tunnel (35) länger als ein Meter sein.

Ist eine der Stirnplatten (71; 106) oder sind beide Stirnplatten (71, 106) - wie in der Figur 8 dargestellt - nasenförmig ausgebildet, kann der Schrott (4) im Ofengefäß (10) verstärkt in den Bereich außerhalb der Elektroden (11) geleitet werden. Hiermit kann die Gefahr von Elektrodenbrüchen beim Chargieren weiter vermindert werden.

Sobald der Schrott (4) in das Ofengefäß (10) verschoben ist, fährt der Schrottschieber (52) zurück in seine eingefahrene Ausgangslage. Die Schwenkklappe (41) kann beispielsweise schwerkraftgesteuert in ihre vertikale Lage zurückklappen.

Der Widerstand des Schrotts (4) kann beim Veschieben schwanken. Dies führt in den hydraulischen Leitungen (132, 133, 147, 148) zum Ansteigen oder zum Sinken des hydraulischen Drucks. Zumindest der kolbenseitige Drucksensor (145) hat einen oberen Druckschwellenwert. Sobald der hydraulische Druck in der Zuführleitung (147) diesen Druckschwellenwert überschreitet, werden das kolbenseitige Vorsteuerventil (152) und das kolbenstangenseitige Vorsteuerventil (154) der zweiten Zylinder-Kolben-Einheit (121) angesteuert und damit die Wegeventile (151, 153) geöffnet. Das von der Druckleitung (142) zugeführte hydraulische Medium verschiebt den Schubklotz (101) in der Führungsrichtung (128) relativ zum Schiebeklotz (61). Aus dem Kolbenstangenraum (129) wird hydraulisches Fluid in den Tank verdrängt. Hierbei ist die spezifische Flächenpressung der normal zur Führungsrichtung (128) projizierten wirksamen Stirnfläche (103) des Schubklotzes (101) auf das einzelne Schrottelement um 60 % größer als die spezifische Flächenpressung der normal zur Schieberführungsrichtung (54) projizierten wirksamen Schieberstirnfläche (53). Aufgrund der höheren Kraft kann der bodennahe blockierende Schrott (4) in Richtung des Ofengefäßes (10) verschoben werden. Der darüberliegende Schrott (4) kann - nach dem Zurückfahren des Schubklotzes (101) - nach unten nachrutschen.

Während des Ausfahrens des Schubklotzes (101) bleiben die hydraulischen Ventile (151, 153) der ersten Zylinder-Kolben-Einheiten (82, 92) z.B. weiterhin geöffnet. Der Schrottschieber (52) kann weiterhin in Richtung des Ofengefäßes (10) verfahern. Sobald der Druck in der hydraulischen Leitung unterhalb eines oberen Rückschaltwertes abfällt, werden die Ventile (151, 153, 155, 157) der zweiten Zylinder-Kolben-Einheit (121) umgeschaltet. Die zweite Zylinder-Kolben-Einheit (121) kann nun wieder einfahren, während der Schrottschieber (52) weiter ausfährt. Dieser Vorgang kann sich während des Hubs des Schrottschiebers (52) mehrfach wiederholen. Der Druckwert des oberen Schwellenwerts kann höher liegen als der Druckwert des Rückschaltwerts, so dass ein Aufschwingen des Systems durch zu häufiges Ein- und Ausschalten vermieden wird.

Die Figur 10 zeigt oberen Bereich diesen Regelkreis (171). Hierin bildet der Schrottschieber (52) die Regelstrecke (172). Der Drucksensor (145) der ersten Zylinder-Kolben-Einheit (82, 92) ist das Messglied (173), das das Steuerglied (174), die zweite Zylinder-Kolben-Einheit (121), anspricht.

Sobald der kolbenseitige Drucksensor (145) einen unteren Schwellenwert unterschreitet, wird die Kolbenstangenseite (144) durch Umschalten des 4/2-Wegeventils (162) hydraulisch mit der Kolbenseite (143) verbunden. Ein Rückschlagventil (163) in der Verbindungsleitung (161) verhindert, dass hydraulisches Fluid in Richtung der Kolbenstangenseite (144) strömt. Die über die Kolbenstange (144) übertragene Kraft ist jetzt nur noch abhängig vom Kolbenstangendurchmesser. Dementsprechend niedriger ist die spezifische Kraft der Schieberstirnfläche (53) auf den Schrott (4). Aufgrund des höheren Volumenstroms in den kolbenseitigen Zylinderraum (88) ist bei dieser Differenzdruckschaltung die Geschwindigkeit des Kolbens im Verhältnis der Kolbenfläche zur Kolbenstangenfläche erhöht.

Bei wieder erhöhtem Widerstand des Schrotts (4) steigt der mittels des Drucksensors (145) ermittelte Druck des Antriebssystems (81) wieder an. Sobald der Druck einen unteren Rückschaltschwellenwert überschreitet, wird die Differenzdruckschaltung wieder ausgeschaltet. Die Zylinder-Kolben-Einheiten (82, 92) verfahren nun wieder mit den gesamten wirksamen Kolbenflächen (89).

Im unteren Bereich der Figur 10 ist dieser Regelkreis (181) dargestellt. Auch in diesem Regelkreis (181) ist der Schrottschieber (52) die Regelstrecke (182) und der Drucksensor (145) der ersten Zylinder-Kolben-Einheiten (82; 92) das Messglied (183). Das Steuerglied (184) bildet jeweils das Wegeventil (162) zum Ein- und Ausschalten der Differenzdruckschaltung.

An allen Zylinder-Kolben-Einheiten (82, 92, 121) kann auch kolbenstangenseitig ein Drucksensor (146) in einen Regelkreis eingebunden sein.

Auch Kombinationen der verschiedenen Ausführungsbeispiele sind denkbar.

### Bezugszeichenliste:

- 4: Einsatzmaterial, Stahlschrott
- 5: Elektrolichtbogenofen
- 6: Schrottsäule

- 10: Ofengefäß
- 11: Elektroden
- 12: Ausmauerung

- 20: Chargierschacht-System
- 21: Traggerüst
- 22: Vorchargierfach
- 23: Verschluss
- 24: Trennwand
- 25: Gleitplatten, Führungsteil
- 26: Schubkorb
- 27: Trichter
- 28: Antrieb

- 31: schachtförmiger Behälter
- 32: Seitenwand
- 33: Absaugöffnung
- 34: Absaugkanal
- 35: Tunnel
- 36: Wand von (31)
- 37: Bodenfläche
- 38: Regelklappe

- 41: Schwenkklappe
- 42: Schwenkachse
- 43: Unterkante
- 44: Ausgangsposition

- 51: Schrott-Schubvorrichtung
- 52: Schrottschieber
- 53: Schieberstirnfläche
- 54: Schieberführungsrichtung
- 55: Linearführung

- 61: Schiebeklotz
- 62: Oberseite
- 63: Stirnfläche
- 64: Seitenflächen
- 65: geraden Bereich
- 66: Führungsbereich
- 67: Gleitplatten, Führungsteil
- 68: Gleitelemente
- 69: Unterseite

- 71: Stirnplatte
- 72: Führungen
- 73: Innenseite
- 74: Ausnehmung
- 75: Führungsaufnahmen

- 81: Antriebssystem
- 82: Antriebseinheit, Zylinder-Kolben-Einheit
- 83: Gelenklager
- 84: Zylinder
- 85: Kolben
- 86: Kolbenstange
- 87: Gelenklager
- 88: kolbenseitiger Zylinderraum
- 89: Kolbenfläche

- 92: Antriebseinheit, Zylinder-Kolben-Einheit

- 101: Schrott-Schubklotz, Schubklotz
- 102: Längsseiten
- 103: Stirnfläche, Schubklotz-Stirnfläche
- 104: Führungsprismen, Führungsteil
- 105: Führungsfläche, Führungsteil
- 106: Stirnplatte
- 107: Nase
- 108: Flügel
- 109: Rückseite

- 121: Antriebseinheit, Zylinder-Kolben-Einheit
- 122: Kolbenfläche
- 123: Gelenklager
- 124: Zylinder
- 125: Kolben
- 126: Kolbenstange
- 127: Gelenklager
- 128: Führungsrichtung
- 129: Kolbenstangenraum

- 131: Wegmeßsystem
- 132: Hydraulikverbindung
- 133: Schläuche
- 134: Schlauchführungskette

- 141: Ventilstand
- 142: Druckleitung
- 143: Kolbenseite
- 144: Kolbenstangenseite
- 145: Drucksensor, kolbenseitig
- 146: Drucksensor, kolbenstangenseitig
- 147: Zuführleitung kolbenseitig
- 148: Zuführleitung, kolbenstangenseitig
- 149: Tankleitung

- 151: 2/2 Wegeventil, kolbenseitig
- 152: Vorsteuerventil
- 153: 2/2-Wegeventil, kolbenstangenseitig
- 154: Vorsteuerventil
- 155: 2/2-Wegeventil, kolbenseitig
- 156: Vorsteuerventil
- 157: 2/2-Wegeventil, kolbenstangenseitig
- 158: Vorsteuerventil
- 159: 2/2-Vorsteuerventil

- 161: Bypassleitung
- 162: 4/2-Wegeventil
- 163: Rückschlagventil
- 164: Schlauch

- 171: Regelkreis
- 172: Regelstrecke
- 173: Meßglied
- 174: Steuerglied, Stellglied

- 181: Regelkreis
- 182: Regelstrecke
- 183: Meßglied
- 184: Steuerglied, Stellglied

## Patentansprüche

1. Schrott-Schubvorrichtung (51) mit einem in einer Linearführung (55) geführten Schrottschieber (52) und mit einem hydraulischen Antriebssystem (81), das mindestens eine Zylinder-Kolben-Einheit (82; 92) umfasst, wobei der Schrottschieber (52) mindestens eine normal zur Schieberführungsrichtung (54) projizierte wirksame Schieberstirnfläche (53) aufweist, **dadurch gekennzeichnet,**
- **dass** der Schrottschieber (52) einen intern geführten Schrott-Schubklotz (101) umfasst, der mittels mindestens einer einen Kolben (125) umfassenden zweiten hydraulischen Zylinder-Kolben-Einheit (121) relativ zur erstgenannten Zylinder-Kolben-Einheit (82; 92) antreibbar ist,
- **dass** dieser Schubklotz (101) eine normal zu seiner Führungsrichtung (128) projizierte wirksame Stirnfläche (103) umfasst und
- **dass** der Quotient aus der wirksamen Kolbenfläche (122) aller zweiten Zylinder-Kolbeneinheiten (121) und der wirksamen Stirnfläche (103) größer ist als der Quotient der wirksamen Kolbenflächen (89) aller ersten Zylinder-Kolben-Einheiten (82; 92) und der wirksamen Schieberstirnfläche (53).

2. Schrott-Schubvorrichtung (51) nach Anspruch 1, **dadurch gekennzeichnet, dass** der Schrott-Schubklotz (101) in einem Schiebeklotz (61) geführt ist.

3. Schrott-Schubvorrichtung (51) nach Anspruch 1, **dadurch gekennzeichnet, dass** der Schrottschieber (52) mittels zweier Zylinder-Kolben-Einheiten (82, 92) antreibbar ist.

4. Schrott-Schubvorrichtung (51) nach Anspruch 1, **dadurch gekennzeichnet, dass** die Größe der wirksame Kolbenfläche (89) einer ersten Zylinder-Kolben-Einheit (82; 92) der Größe der wirksamen Kolbenfläche (122) einer zweiten Zylinder-Kolben-Einheit (121) entspricht.

5. Schrott-Schubvorrichtung (51) nach Anspruch 1, **dadurch gekennzeichnet, dass** der Betrag des Hubs des Schrott-Schubklotzes (101) mindestens 45 % des Betrags des Hubs des Schiebeklotzes (61) beträgt.

6. Schrott-Schubvorrichtung (51) nach Anspruch 1, **dadurch gekennzeichnet, dass** die Stirnplatte (106) des Schrott-Schubklotzes (101) nasenförmig ausgebildet ist.

7. Schrott-Schubvorrichtung (51) nach Anspruch 1, **dadurch gekennzeichnet, dass** die hydraulische Ansteuerung der Zylinder-Kolben-Einheiten (82, 92, 121) einen zuschaltbaren Regelkreis (171) umfasst, dessen Strecke (172) der Schrottschieber (52), dessen Stellglied (174) die zweite Zylinder-Kolben-Einheit (121) und dessen Meßglied ein Drucksensor (145) der ersten Zylinder-Kolben-Einheit (82, 92) ist.

8. Schrott-Schubvorrichtung (51) nach Anspruch 1, dass zummindest die ersten Zylinder-Kolben-Einheiten (82, 92) mittels Differenzdruckschaltungen ansteuerbar sind.

9. Chargierschacht-System (20) mit einem schachtförmigen Behälter (31) und mit einer Schrott-Schubvorrichtung (51) nach Anspruch 1, **dadurch gekennzeichnet, dass** eine der Schrott-Schubvorrichtung (51) abgewandte Wand (36) des schachtförmigen Behälters eine Schwenkklappe (41) mit Schwerkraftrückstellung umfasst, wobei der Hub des Schrottschiebers (52) die Ebene der rückgestellten Schwenkklappe (41) durchdringt.

## Claims

1. Scrap pushing assembly (51) comprising a scrap pusher (52) guided for movement in rectilinear guiding means (55) and a hydraulic drive system (81) including at least one cylinder-piston unit (82; 92), said scrap pusher (52) having at least one effective pushing face (53) projected normally to the direction (54) of pusher movement, **characterized in that**
- the scrap pusher (52) comprises an internally guided scrap push block (101) adapted to be driven relatively to said first-mentioned cylinder-piston unit (82; 92) by means of at least one second hydraulic cylinder-piston unit (121), said second unit (121) including a piston (125);
- the said push block (101) has an effective face (103) projected normally to its direction (128) of movement; and
- the quotient of the effective piston surface area (122) of all second cylinder-piston units (121) and the area of said effective face (103) is greater than the quotient of the effective piston area (89) of all said first cylinder-piston units (82; 92) and the effective area of pusher face (53).

2. Scrap pushing assembly (51) as claimed in claim 1, **characterized in that** scrap push block (101) is guided inside a slide block (61).

3. Scrap pushing assembly (51) as claimed in claim 1, **characterized in that** scrap pusher (52) is adapted to be driven by means of two cylinder-piston units (82; 92).

4. Scrap pushing assembly (51) as claimed in claim 1, **characterized in that** the size of the effective piston surface (89) of a first cylinder-piston unit (82; 92) corresponds to the size of the effective piston surface (122) of a second cylinder-piston unit (121).

5. Scrap pushing assembly (51) as claimed in claim 1, **characterized in that** the magnitude of the stroke of the scrap push block (101) amounts to at least 45 % of the stroke of the slide block (61).

6. Scrap pushing assembly (51)as claimed in claim 1, **characterized in that** the face plate (106) of the scrap push block (101) is configured to have a nose shape.

7. Scrap pushing assembly (51) as claimed in claim 1, **characterized in that** the hydraulic control scheme of the cylinder piston units (82, 92, 121) comprises a selectively engageable closed-loop control circuit (171), with the controlled path (172) thereof comprising the scrap pusher (52), the actuator (174) thereof comprising the second cylinder-piston unit (121) and the measuring element thereof comprising a pressure sensor in the first cylinder-piston unit (82, 92).

8. Scrap pushing assembly (51) as claimed in claim 1, **characterized in that** at least said first cylinder-piston unit (82, 92) is adapted to be controlled by means of differential pressure switching system.

9. Charging shaft system (20) comprising a shaft-like container (31) and a scrap pushing assembly (51) as claimed in claim 1, **characterized in that** said shaft-like container comprises a wall (36) facing away from scrap pushing assembly (51) and including a pivoting shutter flap (41) equipped to be reset by gravity, with the stroke of scrap pusher (52) penetrating the plane of the pivoting shutter flap (41) in the reset position of the latter.

## Revendications

1. Dispositif de poussée de ferraille (51) avec un poussoir de ferraille (52), guidé dans un guidage linéaire (55) et un système d'entraînement hydraulique qui comprend au moins une unité cylindre-piston (82; 92), le poussoir de ferraille (52) présentant au moins une face frontale active (53) projetée perpendiculairement au sens de guidage du poussoir (54), **caractérisé en ce**
- **que** le poussoir de ferraille (52) comprend un bloc de poussée de ferraille (101) guidé de manière interne qui peut être entraîné par rapport à l'unité cylindre-piston (82; 92) premièrement mentionnée au moyen d'au moins une deuxième unité cylindre-piston hydraulique (121) présentant un piston (125),
- **que** ce bloc de poussée (101) présente une face frontale (103) active projetée perpendiculairement à son sens de guidage (128),
- **que** le quotient de la face de piston active (122) de toutes les deuxièmes unités cylindre-piston (121) et de la face frontale active (103) est supérieur au quotient des faces de piston actives de toutes les premières unités cylindre-piston (82; 92) et de la face frontale active (53) du poussoir.

2. Dispositif de poussée de ferraille (51) selon la revendication 1, **caractérisé en ce que** le bloc de poussée de ferraille (101) est guidé dans une cale coulissante (61).

3. Dispositif de poussée de ferraille (51) selon la revendication 1, **caractérisé en ce que** le poussoir de ferraille (52) peut être déplacé à l'aide de deux unités cylindre-piston (82, 92).

4. Dispositif de poussée de ferraille (51) selon la revendication 1, **caractérisé en ce que** la grandeur de la face de piston active (89) d'une première unité cylindre-piston (82; 92) correspond à la grandeur de la face de piston active (122) d'une deuxième unité cylindre-piston (121).

5. Dispositif de poussée de ferraille (51) selon la revendication 1, **caractérisé en ce que** la valeur de la course du bloc de poussée de ferraille (101) correspond au moins à 45 % de la valeur de la course de la cale coulissante (61).

6. Dispositif de poussée de ferraille (51) selon la revendication 1, **caractérisé en ce que** la plaque frontale (106) du bloc de poussée de ferraille (101) est réalisée en forme de nez.

7. Dispositif de poussée de ferraille (51) selon la revendication 1, **caractérisé en ce que** la commande hydraulique des unités cylindre-piston (82, 92, 121) comprend un circuit de régulation (171) activable, composé du poussoir de ferraille (52) comme système commandé (172), de la deuxième unité cylindre-piston (121) comme actionneur (174) et d'un capteur de pression (145) de la première unité cylindre-piston (82, 92) comme élément de mesure.

8. Dispositif de poussée de ferraille (51) selon la revendication 1, **caractérisé en ce qu'**au moins les premières unités cylindre-piston (82, 92) peuvent être commandées par des circuits à pressions différentielles.

9. Système de puits de chargement (20) comprenant un contenant en forme de puit (31) et un dispositif de poussée de ferraille (51) selon la revendication 1, **caractérisé en ce qu'**une paroi (36) du contenant en forme de puit qui est opposée au dispositif de poussée de ferraille (51) comprend un volet pivotant (41) avec rappel sous l'action de la gravité, la course du poussoir de ferraille (52) traversant le plan du volet pivotant (41) rappelé dans sa position de repos.
